(19) **Europäisches Patentamt / European Patent Office / Office européen des brevets**

(11) **EP 1 473 480 B1**

(12) **EUROPEAN PATENT SPECIFICATION**

(45) Date of publication and mention
of the grant of the patent:
**25.04.2007 Bulletin 2007/17**

(51) Int Cl.:
*F16D 51/22* (2006.01)    *F16D 51/24* (2006.01)
*F16D 65/56* (2006.01)    *F16D 51/50* (2006.01)
*F16D 65/58* (2006.01)

(21) Application number: **04076875.6**

(22) Date of filing: **08.10.1997**

(54) **Drum brake device**

Trommelbremse

Frein à tambour

(84) Designated Contracting States:
**DE**

(30) Priority: **08.10.1996 JP 28612696**

(43) Date of publication of application:
**03.11.2004 Bulletin 2004/45**

(62) Document number(s) of the earlier application(s) in
accordance with Art. 76 EPC:
**97117415.6 / 0 836 027**

(73) Proprietor: **Nisshinbo Industries, Inc.**
**Chuo-ku,**
**Tokyo 103 (JP)**

(72) Inventors:
• **Asai, Seiji**
**Aichi 444 (JP)**

• **Kobayashi, Yasushi**
**Minami-ku,**
**Nagoya-shi,**
**Aichi 457 (JP)**

(74) Representative: **Thinat, Michel**
**Cabinet Weinstein**
**56 A, rue du Faubourg Saint-Honoré**
**75008 Paris (FR)**

(56) References cited:
EP-A- 0 836 028          FR-A- 2 697 600
GB-A- 2 194 300          US-A- 3 575 266
US-A- 4 364 456          US-A- 4 387 792
US-A- 5 360 086

**Description**

The present invention relates to a dual mode drum brake device which functions as a leading-trailing (LT) type when the service brake is applied and as a duo-servo (DS) type when the parking brake is applied.

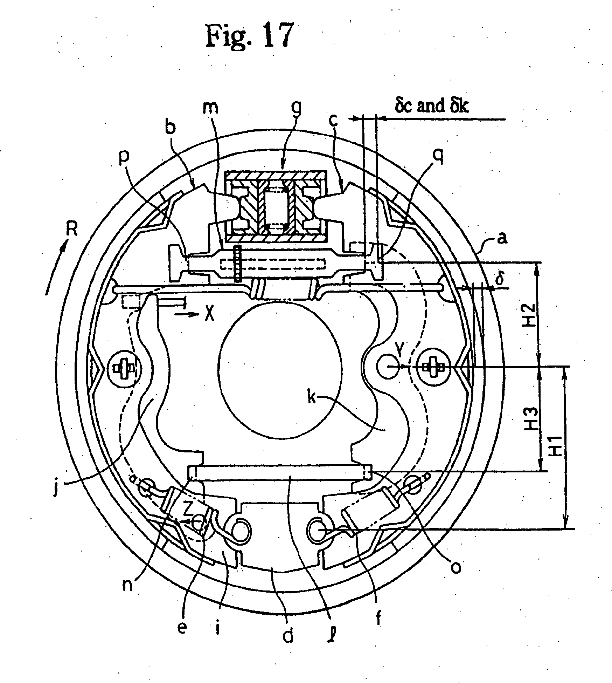

A conventional device of this type is disclosed in the Australian patent number AU-B1-53 491/79 and in the U.S. patent number US-A-5,275,260. The basic brake functions of both references are the same and therefore a structure of the conventional device will be explained with reference to the Australian patent shown in Fig. 17.

A pair of brake shoes b, c are disposed on a back plate a. A hydraulic cylinder g is disposed between first adjacent ends of the brake shoes b, c and an anchor block d is disposed between the second adjacent ends of the brake shoes b, c. An idler lever k is pivotally mounted on the first brake shoe c and a parking lever j is pivoted on one end i of the second brake shoe b. A first rod l is disposed between the two brake shoes b, c with one end n engageable with the parking lever j and the other end o engageable with the idler lever k. A second rod m has one end p engageable with the second brake shoe b and the other end q engageable with the first brake shoe c and the idler lever k.

The operation of the brake is explained as follows. When the driver steps on the brake pedal, the hydraulic cylinder g is pressurized. The two brake shoes b, c spread open while being abutted against the anchor block d as the fulcrum, thereby frictionally engaging the rotating brake drum (not shown) in a leading-trailing braking action.

When the parking brake is applied, the parking lever j is urged in the direction of the arrow X. The force of this action is transferred in sequence to the first rod 1, the idler lever k, the second rod m and the second brake shoe b. The brake shoe b opens about its point of abutment against the anchor block d and frictionally engages with the brake drum. At the same time, the idler lever k is urged outwardly being abutted against the second rod m as the fulcrum. The idler lever k urges the first brake shoe c outwardly at its pivot point in the direction of the arrow Y to frictionally engage with the brake drum. Additionally, a reactive force of the parking lever j arises in the direction of the arrow Z at the end i of the second brake shoe b.

If at this time, the brake drum is rotating in the direction of the arrow R of Fig. 17, the frictional force on the second brake shoe b is transferred to the second rod m. The other end q of the rod m presses against the first brake shoe c, which is supported by the anchor block d, giving rise to the duo-servo braking action. If the brake drum rotates in the opposite direction of the arrow R, the frictional force on the first brake shoe c is transferred to the second rod m. The one end p of the rod m is then pressed against the second brake shoe b, which is supported by the anchor block d, resulting in the same duo-servo braking action as above.

As is evident from this parking brake operation, when the other end q of the second rod m abuts against the idler lever k and a gap arises between the other end q and the first brake shoe c, then the piston of the hydraulic cylinder g extends by an amount equivalent to the gap. This is the case whether the brake drum rotates in the opposite direction of the arrow R. As a result, the brake pedal retracts which is not only disconcerting to the driver but also the pedal stroke increases for the next brake application.

Conversely, if the other end q of the second rod m abuts against the first brake shoe c and a gap exists between the other end q and the idler lever k, then the stroke of the parking lever j increases by an amount equivalent to the gap. This causes the stroke required in operating the hand brake lever to increase. It would clearly be preferable that the gap between the other end q of the second rod m and and either the first brake shoe c or the lever k be as small as possible.

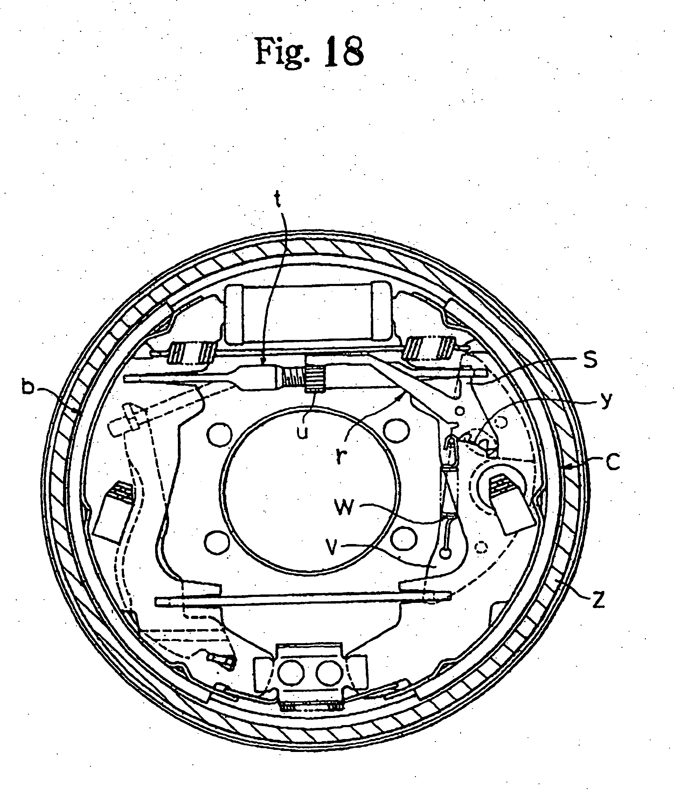

Fig. 18 illustrates the dual mode drum brake device with an automatic shoe clearance adjustment device as disclosed in US-A-5,275,260. The base end y of an adjustment lever r is pivotally mounted on the web of the brake shoe c, while an upper arm s is engaged with a bottom of a groove of an upper strut t or a second rod. Another arm engages with a star wheel u on said upper strut t. A spring w mounted between the adjustment lever r and an idler lever v urges the adjustment lever r in the counter-clockwise direction with the base end y as the fulcrum. When the brake linings become worn causing the two brake shoes b, c to spread open more than a predetermined value, another arm causes the star wheel u to rotate. This rotation automatically increases the entire length of the upper strut t thereby maintaining a constant clearance between the brake shoes b, c and the brake drum z.

The conventional dual mode drum brake devices as described above have the following areas for improvement.

1. The cumulative effect of the tolerances of each component of the parking brake system will inevitably create a gap between the idler lever k and the first rod 1 or the second rod m, and the brake stroke becomes ineffective by an amount equivalent to this gap.

2. Moreover, as the lining of the first brake shoe c gradually wears, there is a gradual displacement of the point at which the second rod m interlocks with the brake shoe c or the idler lever k. That is, as shown in Fig. 17, the amount of displacement $\delta$ of the brake shoe c at the brake center, and the amount of displacement $\delta c$ and $\delta k$ of said brake shoe c and idler lever k respectively from the interlocking point with the second rod m are defined as follows:

$$\text{Brake shoe displacement } \delta c = ((H1+H2)/H1) \times \delta \qquad (1)$$

$$\text{Idler lever k displacement } \delta k = ((H2+H3)/H3) \times \delta \qquad (2)$$

H1: Distance from anchor block d to the brake center (pivot point of brake shoe c and idler lever k)
H2: Distance from the brake center (pivot point of brake shoe c and idler lever k) to the second rod m
H3: Distance from the brake center (pivot point of brake shoe c and idler lever k) to the first rod 1 l
$\delta$: Amount of lining wear at the pivot point of the brake shoe c and idler lever k

In this case, H3 is considerably smaller than H1, hence the displacement $\delta k$ of the idler lever k will be considerably larger than the displacement $\delta c$ of the brake shoe c. As a result, the stroke of the parking lever j will increase as the lining wears. The driver not only feels a greater slackness in the hand brake, but there are concerns as well that the lever j could interfere with other components to lessen the effectiveness of the parking brake. In addition, the stroke of the parking lever j could also limit the brake size, brake offset, and other brake factors to constrain the degree of freedom in the brake design.

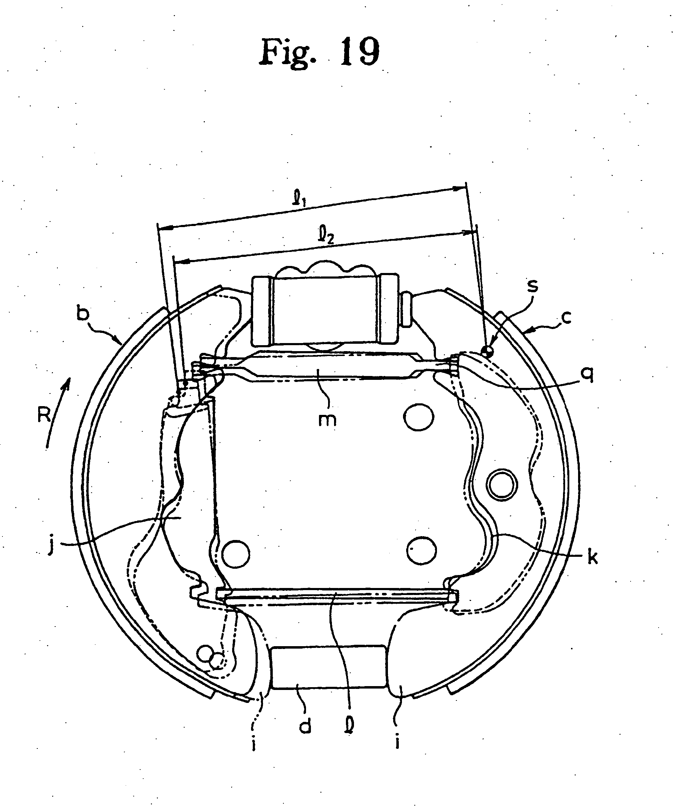

3. If the brake drum rotates in the direction of the arrow R when the parking brake is applied, then the second brake shoe b, the parking lever j and other components will turn in unison in the same direction (the degree of rotation will be equivalent to the distance traveled by the other end q of the second rod m until it starts to press against the first brake shoe c). Fig. 19 is a conceptual drawing of this operation. The double-dash broken line shows the state of the device if the parking brake is activated after the vehicle is stopped by the service brake on a slope, wherein the one end i of both brake shoes b, c are supported by the anchor block d. Then if the service brake is released in this state, the force of gravity acting on the vehicle causes the brake drum (not shown) to rotate in the direction of the arrow R, wherein the second brake shoe b and the parking lever j are shifted to the positions indicated by the solid line and broken line respectively. As a result, if point s is the outlet of the parking brake cable pulling mechanism, then the distance from the point s to the pulled component of the parking lever j is shortened by an amount equal to ($l_1 - l_2$). In other words, in a case of the conventional dual mode drum brake device of which H3 and H2 are set to be equal, the pulled component of the parking lever j is shifted in the direction of the pull to loosen the locked pulling mechanism, thus reducing the effectiveness of the parking brake.

4. When only the parking brake is applied, the adjacent ends of each side of the two brake shoes b, c move apart to spread open the whole brake shoes. In other words, the lower ends of both shoes also separate at once from the anchor block d. When the brake drum which is engaged with the wheel starts to rotate with the device in this state, both brake shoes b, c, the rods l, m, and other components all rotate together, wherein the first or the second brake shoe collides against the anchor block d. The noise so generated is not only disconcerting to the driver, but since this impact load is applied repeatedly on the anchor block d, the strength of the components becomes critical.

5. In the conventional dual mode drum brake device as disclosed in Australian Patent number AU-B1-53 491/79, the cumulative effect of the tolerances of each component will be such that the idler lever k could abut against the second rod m or play could be generated. At the very least, play will be generated when the driver steps on the brake pedal. Accordingly, the idler lever k could vibrate when the vehicle is in motion or the service brake is applied, generating a strange noise which can be disconcerting to the driver.

6. In the conventional dual mode drum brake device as disclosed in US-A-5,275,260, as the lining wears, the adjustment lever r shifts in tandem with the brake shoe c with the point of abutment of the brake shoe c against the anchor block as the fulcrum, while the idler lever v shifts with its point of abutment against the lower strut as the fulcrum. This changes the force of the adjustment spring urging the adjustment lever, which will have a negative effect on the automatic adjustment action when only a minimal adjustment is required.

FR-A-2697600 discloses a dual mode drum brake device
The applicant filed a new European patent application having a function as same as above-mentioned dual mode drum brake device. However, the application not only discloses the relationship that the distance h3 or H3 from the pivot point of the idler link to the parking brake actuator means for the parking brake or the first rod is greater than the distance h2 or H2 from the pivot point to the shoe clearance adjustment device or the second rod but also discloses a relationship that the distance h3 or H3 is smaller than the distance h2 or H2.

An object of the present invention is to provide a dual mode drum brake which overcomes the above-mentioned problems.

According to the present invention, a drum brake device is provided as defined in claim 1. In this aspect of the invention, the distance from the pivot point of the idler link or idler lever to the strut of the parking brake actuator means is greater than the distance from the pivot point to the shoe clearance adjustment device.

The various components of the drum brake devices are preferably such that when the service brake is applied and the first and second brake shoes are urged to separate, the idler link moves together with the first brake shoe.

In another embodiment, the shoe clearance adjustment device is provided with an automatic adjustment mechanism which is adapted to sense the amount by which the brake shoes spread open upon application of the service brake. The mechanism is configured to then adjust the clearance between the brake shoes and the brake drum.

In a further embodiment, urging means are provided to urge the brake shoes toward one another. The urging means are designed such that the resistance to spread open the brake shoes at their second ends is greater than the resistance to spread open at their first ends.

The urging means preferably comprise a first shoe return spring mounted between the first ends of the brake shoes and a second return spring mounted between the second ends of the brake shoes. The force constants of the springs are determined such that the torque about the pivot point of the idler link resulting from the second shoe return spring is greater than that resulting from the first shoe return spring.

The pivotal mounting of the idler link with respect to the first brake shoe can take various forms. A protuberance as the pivot point can be integrally formed at the mid section of the idler link, the protuberance being pivotal in a hole formed in the shoe web of the first brake shoe. Alternatively, a protuberance can be formed at the mid section of the shoe web of the first brake shoe, the protuberance then being fitted into a hole formed in the mid section of the link.

The present invention provides the following advantages.

By means of the stroke adjustment device, the distance between the parking brake lever and the idler link can be adjusted. This ensures that the stroke by the parking brake lever remains substantially the same throughout the lifetime of the brake shoe linings, thereby keeping a good operational feeling when the parking brake is applied.

The relative positions of the first brake shoe and the idler link when both of which engage with the shoe clearance adjustment device in the lengthwise direction of the shoe clearance adjustment device are maintained. As a consequence, when the parking brake is applied, even if the brake drum exerts a torque on the brake shoes, the piston of the service brake actuator is displaced only minimally. This provides good pedal feeling when the service brake is applied after the parking brake and the service brake have been applied simultaneously.

In a preferred embodiment, the lever ratio of the idler link is altered in such a way that an increase of a parking brake stroke as the lining wears is prevented and that the parking brake lever cannot move in the direction of the slacking of the parking brake cable. Thus, there is no reduction in braking effectiveness when the vehicle is stopped on a slope and the service brake is released after the hand brake has been locked. This alleviates any driver's trouble of stepping on the foot brake again or to pull the hand brake again for the vehicle's restarting after the service brake is released

By biasing the brake shoes to engage with the anchor block, the generation of noise is substantially eliminated, even when the parking brake is applied. This eliminates any uncertainty or anxiety of the driver. Moreover, with the second ends of the brake shoes being urged to engage with the anchor block, the possibility of impact loads on the anchor block can be eliminated. Hence the strength of the materials can be reduced and the device can be made lighter.

The adjacent ends of the brake shoes of the conventional brakes, when the brake lever is not set in its return position precisely, will be separated from the anchor block even if the brake is not operated. Therefore, the brake shoes may slightly but undesirably move in the brake drum upon the operation of the vehicle. The movement may cause unusual dragging between the lining and the brake drum and/or may have the brake shoe to bite the brake drum resulting in the wheel being locked.

Preferably the shoe return springs are provided at either end of the brake shoes, where the return force of the springs urging the shoes towards the anchor block is greater. This measure effectively eliminates impact loads and ensures long-term reliability and durability of the respective components.

Further objects and advantages of the present invention will now be discussed in conjunction with the description of embodiments illustrated in the drawings, in which

Fig. 1 is a plan view of a drum brake device according to a first embodiment;

Fig. 2 is a cross-sectional view of the embodiment of Fig. 1 taken along the line II-II;

Fig. 3 is a cross-sectional view of the embodiment of Fig. 1 taken along the line III-III;

Fig. 4 is a cross-sectional view of the embodiment of Fig. 1 taken along the line IV-IV;

Fig. 5 is a cross-sectional view of the embodiment of Fig. 1 taken along the line V-V;

Fig. 6 illustrates a modification of the pivotal connection of Fig. 5;

Fig. 7 is an exploded diagram of first brake shoe, the idler link and related components;

Fig. 8 is a plan view of a drum brake device according to another embodiment of the present invention;

Fig. 9 is an illustration explaining the operation of the drum brake device in the embodiment of Fig. 8;

Fig. 10 is a partial enlarged diagram of a drum brake device according to a further embodiment of the invention;

Fig. 11 is a cross-sectional view of the embodiment of Fig. 10 taken along the line XI-XI;

Fig. 12 is a plan view of a drum brake device according to another embodiment of the present invention;

Fig. 13 is a partial enlarged diagram of the device of Fig. 1 showing a further embodiment of the present invention;

Fig. 14 is a plan view of a drum brake device according to another embodiment of the present invention;

Fig. 15 is a cross-sectional view of the embodiment of Fig. 14 taken along the line XV-XV;

Fig. 16 is a cross-sectional view of the embodiment of Fig. 14 taken along the line XVI-XVI;

Fig. 17 is a plan view of a conventional drum brake device as disclosed in Australian patent number AU-B1-53 491/79;

Fig. 18 is a plan view of another conventional drum brake device as disclosed in the U.S. patent number US-A-5,275,260;

Fig. 19 is an illustration of the operation of the conventional drum brake devices.

## Embodiment 1

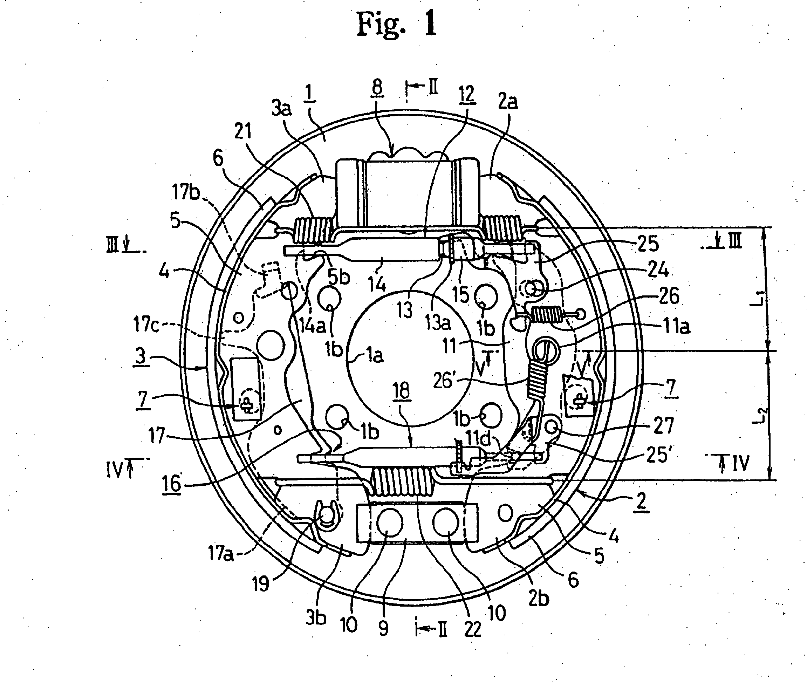

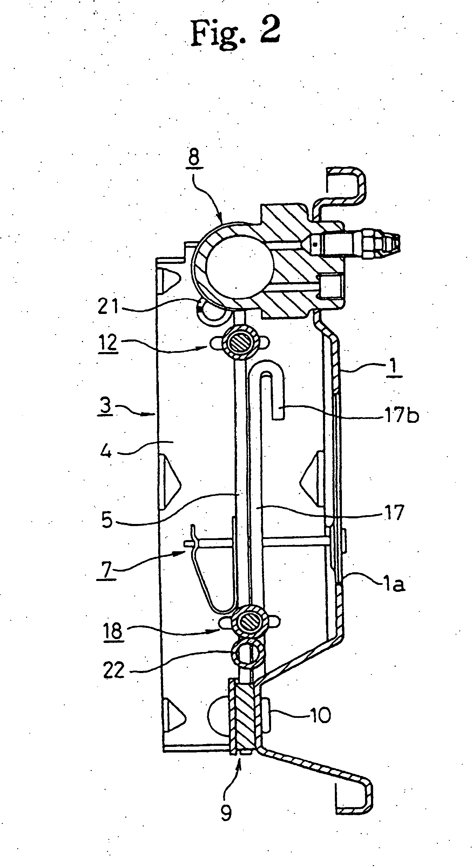

The overall configuration of a first embodiment of the present invention is given in Figs. 1 to 7. The back plate 1 comprises a central hole 1a in which the vehicle axle is freely received, where the back plate 1 is fixed to a stationary part of the vehicle by four bolts inserted through the bolt holes 1b. A pair of first and second brake shoes 2, 3 are disposed opposite one another, each configured from a shoe rim 4 and a shoe web 5 joined in a T cross section with a lining 6 fixed on the outer surface of the shoe rim 4. Friction created as the linings are forced against the interior of a brake drum (not shown) produces the braking action. The brake shoes 2, 3 are mounted on top of the back plate by means of a shoe hold mechanism 7 of the plate spring and pin type known per se.

The actuator 8 activated by the service brake comprises a cylinder disposed between a first pair of adjacent ends 2a, 3a of the two brake shoes 2, 3 and is affixed to the back plate 1 by bolts or other securing means. The actuator normally employed is a hydraulic wheel cylinder known per se but can also be an air wheel cylinder.

An anchor block 9 is disposed between a second pair of adjacent ends 2b, 3b of the brake shoes 2, 3. The anchor block 9 is normally secured on a raised portion of the back plate 1 by two rivets 10, but can be welded if desired. Moreover, an anchor pin or bolt can be used in place of the rectangular plate. In either case, the anchor must support each of the second adjacent ends 2b, 3b of the brake shoes 2, 3.

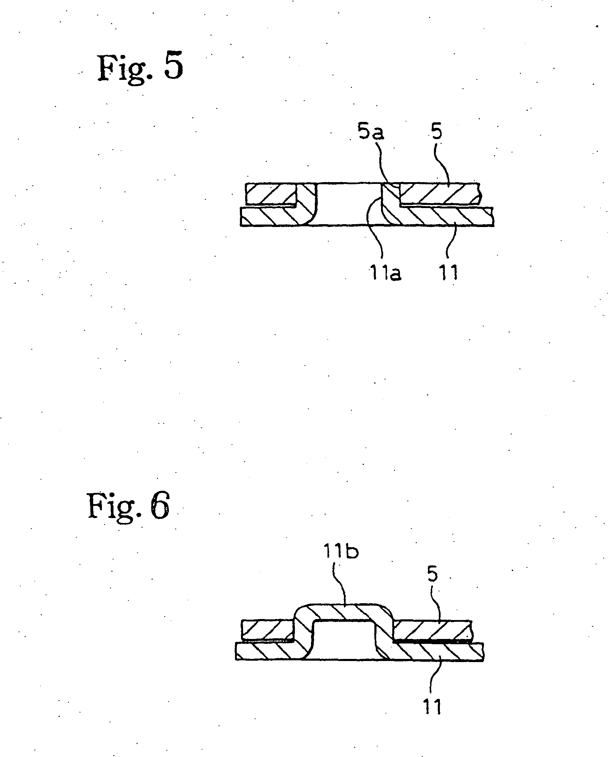

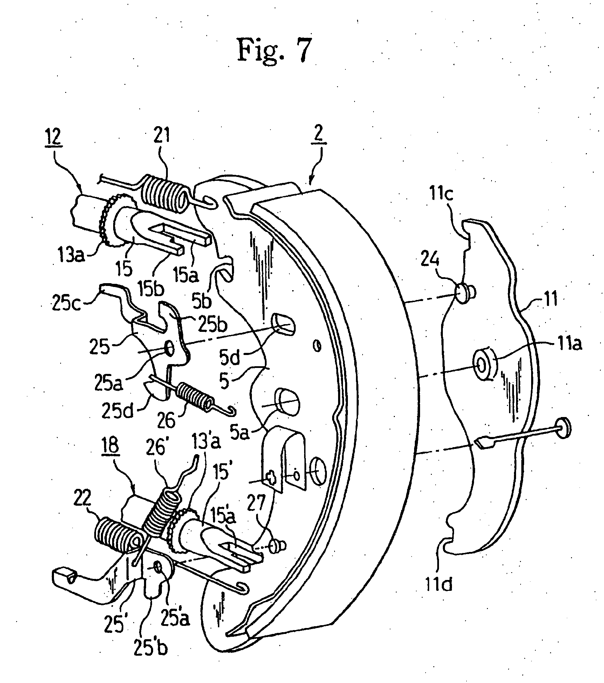

An idler link 11 is pivotally mounted to the shoe web 5 of the first brake shoe 2 and a protuberance 11a, preferably a burr formed with a press as shown in Fig. 5, is molded in the center of the idler link 11. The burr passes into the hole 5a formed in the shoe web 5. Fig. 5 illustrates a tube shaped protuberance 11a, however it can also be molded by a press to form an inverse U-shaped protuberance 11b as shown in Fig. 6. Either of the protuberances 11a or 11b can be integrally formed by a press from the idler link 11. Alternatively, a protuberance can be formed on the shoe web 5 and a hole provided in the idler link 11 or a separate pin can be provided to pivotally mount the idler link 11 to the shoe web 5. As shown in Fig. 1 or 7, the idler link 11 is provided with notched grooves 11c, 11d at its first and second ends respectively.

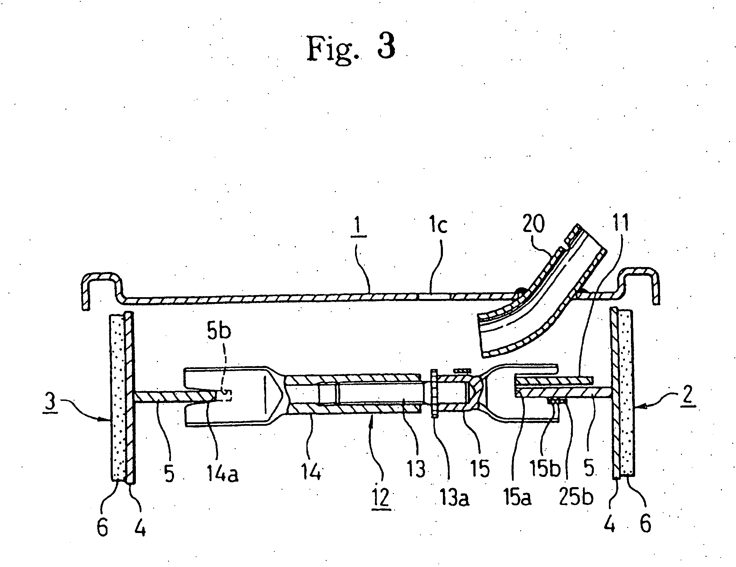

A shoe clearance adjustment device 12 of the conventional type is provided to adjust the clearance between the brake drum (not shown) and the brake shoes 2, 3. In the figures the automatic shoe clearance adjustment device described in more detail later is illustrated. A screw driver can be inserted into a hole 1c provided in the back plate 1 as shown in Fig 3 or a hole provided in the brake drum. In this manner, a toothed adjustment wheel 13a integrally formed with a adjustment bolt 13 can be turned. The adjustment bolt 13 is threaded and engages with the tubular segment 14 of the adjustment device 12. By screwing the bolt 13 into or out of the tubular segment 14, the length of the clearance adjustment device 12 can be manually adjusted. As illustrated in Fig. 3, a sleeve 15 supports one end of the adjustment bolt 13 and comprises a thin plate portion near the first brake shoe 2. The tubular segment 14 also comprises a thin plate portion near the second brake shoe 3. The respective plate portions comprise notched grooves 14a, 15a therein. The bottom of the notched groove 14a engages with the bottom of a notched groove 5b formed in the shoe web 5 of the second brake shoe 3. In the same manner, the bottom of the notch groove 15a engages with the bottom of a notched groove 11c at the first end of the idler link 11 as well as the bottom of a notched groove 5b formed in the shoe web 5 of the first brake shoe 2. Owing to the tolerance in manufacturing the first brake shoe 2, the idler link 11 and other components, in practice there will be a minimal gap equivalent to the tolerances at the bottom of the notched groove 11c or 11d of the link 11.

Returning to Fig. 1, parking brake actuator means 16 is provided comprising a forward-pull type brake lever 17, a strut 18 and other components. The brake lever 17 is pivotally mounted on the shoe web 5 of the second brake shoe 3. Its base end 17a is mounted on a pivot pin 19 to the second end 3b of the second brake shoe 3. The free end 17b of the brake lever 17 comprises a U-shaped groove into which one end of a parking brake cable (not shown) is fixed. A stopper 17c formed to abut against the inner face of the shoe rim 4 regulates the return position of the brake lever 17 when the parking brake is not applied.

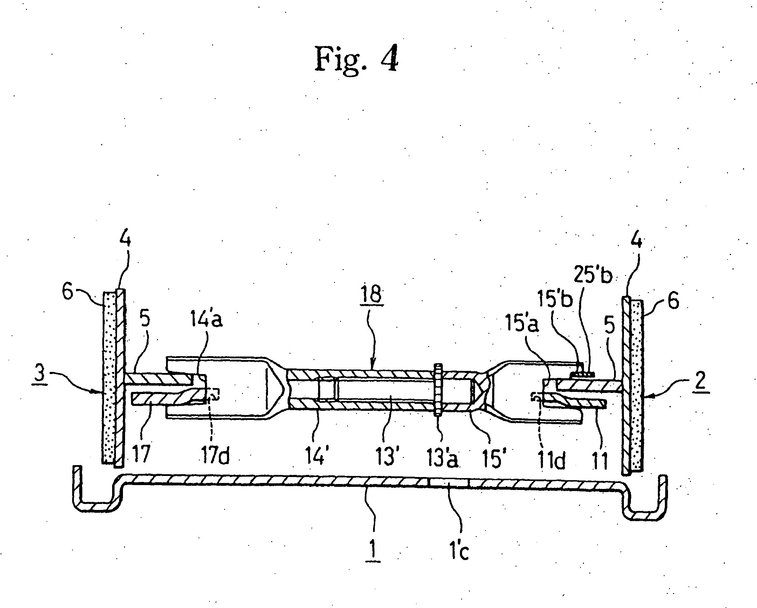

As shown in Fig. 4, the strut 18 is provided as a clearance adjustment device for adjusting the clearance between the idler link 11 and the brake lever 17. Its configuration and function are essentially the same as the above discussed shoe clearance adjustment device 12 disposed between the brake shoes. Its structural components are denoted with like reference numerals and an apostrophe. Fig. 1 illustrates an automatic stroke adjustment device used in conjunction with the strut 18 which will be described in detail below. However, a screw driver can be inserted into the hole 1'c formed in the back plate 1 or the hole formed in the brake drum to adjust the device manually. The toothed adjustment wheel 13'a which is integrally formed with the adjustment bolt 13' turned in this manner. Screwing the adjustment bolt 13' into or out of the tubular segment 14' will manually adjust the length of the strut 18 acting as a clearance adjustment device.

As shown in Fig. 4, an each thin plate is formed at the ends of the tubular segment 14' and the sleeve 15' respectively. Notched grooves 14'a, 15'a are formed at the respective outer ends of the plates. These grooves are arranged to engage with a notched groove 17d of the brake lever 17 and the notched groove 11d on the second end of the idler link 11 respectively. The strut 18 can be adjusted manually as described above such that no slack exists in axial direction.

As shown in Fig. 3, a tubular member 20 is secured to the back plate 1 for guiding the parking brake cable into the device housing.

As shown in Fig. 1, a first shoe return spring 21 is disposed adjacent to the actuator 8 for the service brake. The spring 21 is mounted between the first adjacent ends 2a, 3a of the two brake shoes 2, 3. A second shoe return spring 22 is disposed adjacent to the anchor block 9. The spring 22 is mounted between the second adjacent ends 2b, 3b of the two brake shoes 2, 3. The mounted load of the shoe return springs 21, 22 are set such that the ends of the brake shoes 2, 3 are urged into continuous contact with the anchor block 9. More particularly, the first and second shoe return springs 21, 22 are dimensioned to satisfy the following relationship expressed in terms of torque acting on the brake shoes 2, 3;

$$F1 \times L1 < F2 \times L2,$$

where

    F1: Mounted load of the first return spring 21
    F2: Mounted load of the second return spring 22
    L1: Distance from the pivot point 11a of the first brake shoe 2 with the link 11 to the first return spring 21
    L2: Distance from the pivot point 11a of the first brake shoe 2 with the link 11 to the second return spring 22

The operation of the first embodiment when the service brake is applied will now be discussed. When the driver presses the brake pedal, the actuator 8 is pressurized, whereby the first ends 2a, 3a of the brake shoes 2, 3 spread apart and the second ends 2b, 3b being abutted against the anchor block 9. The linings 6 are forced against the rotating brake drum (not shown) thereby creating friction to brake the vehicle. Either the first brake shoe 2 or the second brake shoe 3 has a self-servo property depending on the rotational direction of the brake drum while remained brake shoe does not. The device therefore functions as a leading-trailing braking mechanism.

Next, the operation of the parking brake is discussed in conjunction with Fig. 1. When the hand brake lever (not shown) is applied, the free end 17b of the brake lever 17 is drawn to the right by the parking brake cable (not shown). The brake lever 17 is caused to rotate clockwise with the pivot pin 19 at its end 17a as the fulcrum and pushes the strut 18 by the force that an application force multiplied by lever ratio. The strut 18 presses against the notched groove 11d of the second end of the idler link 11 causing the link 11 to rotate counter-clockwise with its pivot point at the protuberance 11a as the fulcrum. Through this rotation, the force is transferred to the notched groove 5b of the second brake shoe 3 via the shoe clearance adjustment device 12. The first end 3a of the second brake shoe 3 opens outwardly with its second end 3b acting as a fulcrum at the anchor block 9. This movement presses the lining 6 of the brake shoe 3 against the brake drum

The force causing counter-clockwise rotation of the idler link 11 urges the first notched groove 11c to abut against the shoe clearance adjustment device 12. This produces a counter action force which is transferred to the hole 5a in the first brake shoe 2 by means of the protuberance 11a. As indicated above, the torque applied about the pivot point 11a from the second shoe return spring 22 is larger than that from the first return spring 21. The first brake shoe 2 therefore opens with its second end 2b held to the anchor block 9 as the fulcrum. The first end 2a of the brake shoe 2 opens and presses against the brake drum.

If the brake drum is rotating in the clockwise direction in Fig. 1, the frictional force on the second brake shoe 3 is transferred to the first brake shoe 2 via the shoe clearance adjustment device 12, whereby the second end 2b of the brake shoe 2 is supported at the anchor block 9 to generate a braking force. Hence, the drum brake device of this embodiment functions as a duo-servo type in which both brake shoes 2, 3 have a self-servo effect.

If the drum rotates in the counter-clockwise direction in Fig. 1, the frictional force acting on the first brake shoe 2 is transferred to the second brake shoe 3 via the shoe clearance adjustment device 12, whereby the second end 3b of the second brake shoe 3 is supported by the anchor block 9 to generate a braking force. Again, the drum brake device functions as a duo-servo type in which each of the brake shoes 2, 3 have a self-servo effect.

In this embodiment, as discussed above, the size of the gap between the notched groove 5b of the first brake shoe 2 and the notched groove 11c of the idler link 11 changes as the linings 6 wears. However, the length of the strut 18 can be adjusted to be elongated by a suitable amount, thereby minimizing the stroke of the brake lever 17 and the amount of return of the piston in the service brake actuator 8. This will eliminate any slackness in the hand brake as well as any concern about interference between the other components.

As is evident from the above explanation, the brake shoes 2, 3 do not separate from the anchor block 9 when either the service brake or the parking brake is applied. The effect is the same when both brakes are applied simultaneously. Accordingly, the second adjacent ends 2b, 3b of the first or second brake shoe respectively does not collide with the anchor block 9 to generate noise, nor does an impact load arise against the anchor block 9. This effect is an advantage over the conventional device in which the two brake shoes 2, 3 spread open completely when the parking brake is applied. The second adjacent ends 2b, 3b of the prior art separate from the anchor block 9 thus generating noise when the brake drum starts to rotate and also applying an impact load subsequently onto the anchor block 9. The negative effects are substantially prevented in the above embodiment.

## Embodiment 2

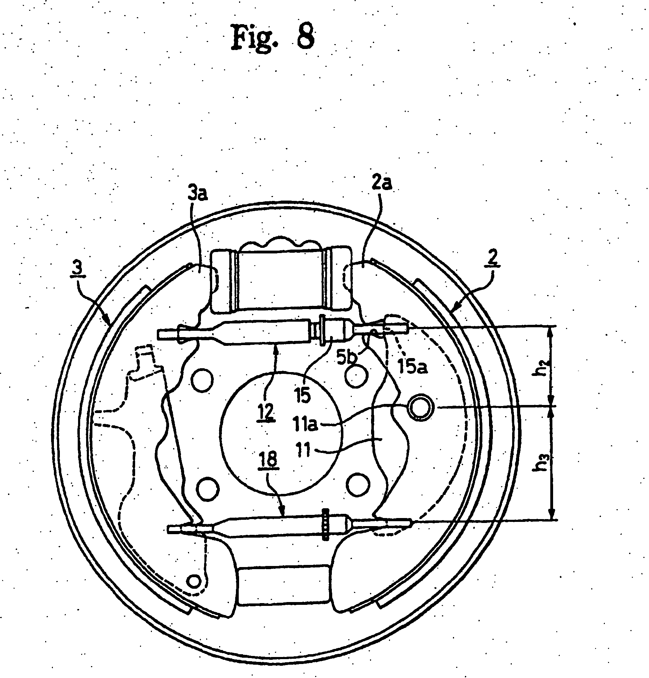

Fig. 8 illustrates a second embodiment of the invention in which the pivot position of the idler link 11 is modified. All other configurations are substantially the same as in Embodiment 1 and are identified with the same reference numeral, wherein an explanation of these components is omitted here.

The idler link 11 according to this embodiment is constructed such that h3 > h2, where

h2 Distance from the pivot point at the protuberance 11a of the idler link 11 to the engagement point of the idler link 11 against the shoe clearance adjustment device 12

h3 Distance from the pivot point at the protuberance 11a of the idler link 11 to the engagement point of the idler link 11 against the strut 18.

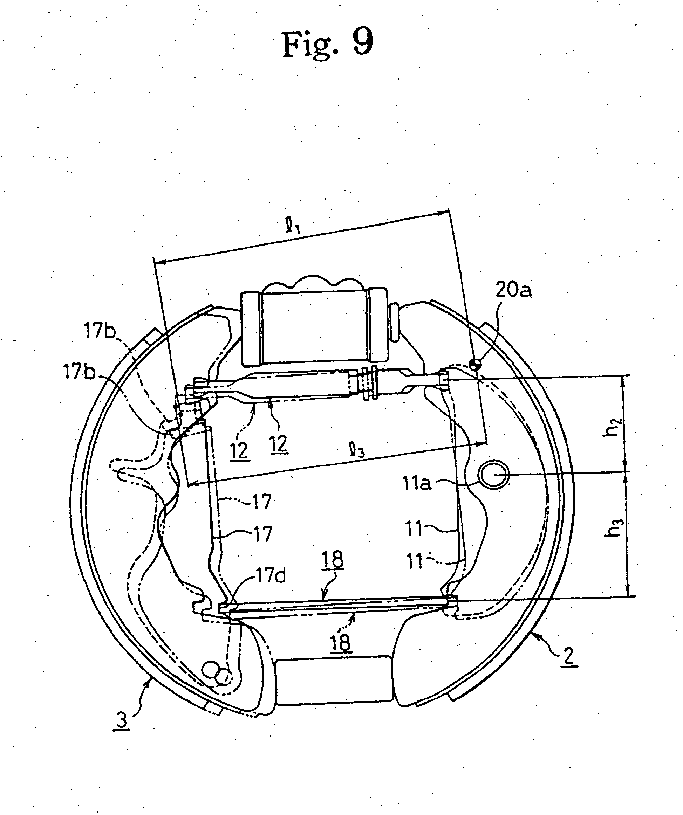

When the vehicle is stopped on a slope, in most cases by means of the service brake, the parking brake is then applied and locked by a hand lever in the passenger compartment, whereafter the service brake is released. During this operation, the first ends 2a, 3a of the brake shoes 2, 3 spread open outwardly, while the idler link 11 rotates counter-clockwise about the protuberance 11a. Thus a gap is opened between the bottom of the notched groove 5b on the first brake shoe 2 and the bottom of the notch groove 15a of the sleeve 15. The size of the gap corresponds to the amount of the rotation of the idler link 11. In this condition, with the vehicle standing on a slope (uphill or downhill), forces may arise to rotate the brake drum in the clockwise direction, as shown in Fig. 9 and therefore the second brake shoe 3, the brake lever 17 and related components rotate in unison by an amount just enough to close the above mentioned gap.

In other words, the bottom of the notched groove 15a of the sleeve 15 will abut against the bottom of the notched groove 5b of the idler first brake shoe 2. However, the lever ratio of the link 11 has been set such that h3 > h2 as shown in Fig. 9. Thus, the pre-rotation condition (indicated by the double dash broken line) shifts to the post-rotation condition (indicated by the solid and broken lines) and the strut 18 pushes the bottom of the notched grooves 17d of the brake lever 17 by an amount determined by the lever ratio of the link 11.

As a result, the free end 17b of the brake lever 17 is displaced. If the distances from the outlet 20a of the parking brake cable connection to the pulled component of the brake lever 17 in the pre-rotation condition and the post-rotation condition are represented by "$l_1$" and "$l_3$" respectively, the distance is lengthened by an amount equal to ($l_3 - l_1$) . As a result, the tension of the parking brake cable is heightened and therefore the braking effectiveness dose not reduce. Accordingly, this avoids any over reaction of the driver to step on the brake pedal or to pull the hand brake harder as occurs with conventional devices.

In addition, the parking brake cable for the parking brake normally winds under the floor of the vehicle, the other end being connected to a hand lever inside the passenger compartment. If the free end 17b (pulled component) of the brake lever 17 was shifted as the above explained, the only effect would be that a short length of a curved portion of the parking brake cable will be straightened, without harmful effects on any structural component. It will be apparent that the lever ratio of the idler link, i.e. the relationship between the lengths h2 and h3, can be set at any suitable value as required.

Should the brake drum be caused to rotate in the counter-clockwise direction, neither the second brake shoe 3 nor the brake lever 17 is moved to generate any slackness in the parking brake cable.

**Embodiment 3**

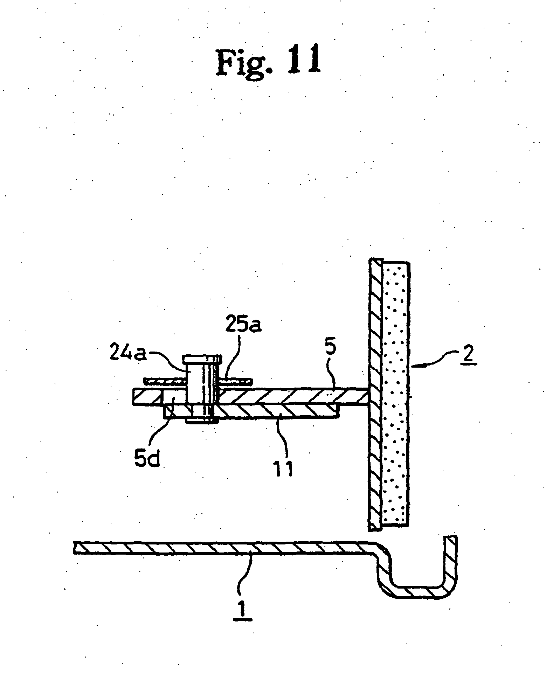

The present embodiment includes an incremental type automatic shoe clearance adjustment device and will be discussed in conjunction with Figs. 1, 3, 7, 10 and 11. As shown in Fig. 7 and Figs. 10 and 11, a pin 24 is secured to the first end of the idler link 11 and freely penetrates through an elongated hole 5d formed in the shoe web 5 of the first brake shoe 2. As will be described below, the pin 24 is urged to engage with the elongated hole 5d on the outer side of the brake. An adjustment lever 25 comprises a hole 25a formed at its mid section, about which the lever 25 is pivotal about the pin 24. First arm 25b of the adjustment lever 25 abuts against the stepped face 15b of the notched groove 15a of the sleeve 15, while second arm 25c engages with the toothed adjustment wheel 13a of the adjustment bolt 13.

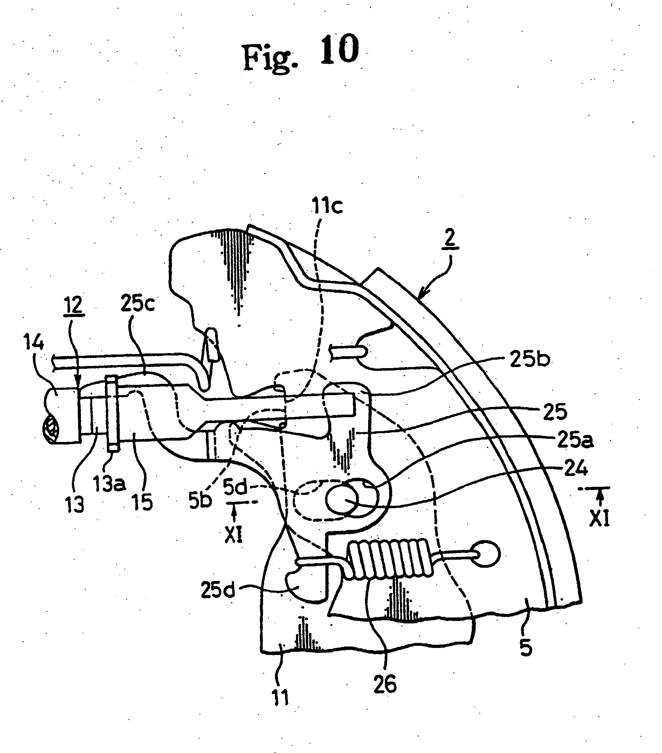

Alternatively, the pin 24 can be secured to the shoe web 5 and the adjustment lever 25 can pivot on the stem of the pin 24. An adjustment spring 26 is mounted between a third arm 25d of the adjustment lever 25 and the shoe web 5 as shown in Fig. 10, which is a partial enlargement of Fig. 1. The adjustment spring 26 urges the adjustment lever 25 in counter-clockwise direction about the pin 24. In this condition, the circumference of the pin 24 is urged to engage with the inner radial edge of the elongated hole 5d on the outer side of the brake. Thus when the idler link 11 is temporarily assembled onto the first brake shoe 2, the proper alignment of the notched groove 5b of the first brake shoe 2 and the notched groove 11c of the idler link 11 can be easily ascertained visually.

The automatic shoe clearance adjustment device can alternately be arranged on the second brake shoe 3, which would represent a symmetrical disposition from right to left in Fig. 1. In this case, the adjustment lever 25 would pivot on the pin 24 mounted to the shoe web 5 of the second brake shoe 3. The shoe clearance adjustment device 12 is set with the left and right sides reversed and a spring mechanism is installed to provide the same biasing to the adjustment lever 25 as discussed above. In this case, even if the brake lever was pulled, the engagement position of the adjustment lever 25 and the adjustment wheel 13a will not change and the automatic adjustment action will be more stable.

Operation of the shoe clearance adjustment will now be discussed in conjunction with Figs. 1 and 10. When the service brake is applied, the two brake shoes 2, 3 spread open, while the automatic adjustment device 12 trails the second brake shoe 3. The idler link 11 essentially trails the first brake shoe 2. During this action, the second arm 25c of the adjustment lever 25 turns counter-clockwise as shown in Fig. 10 about the pin 24 by an amount equivalent to the amount of the movement of the pin 24 and the automatic adjustment device itself. As the linings 6 increase wear, the amount of rotation of the second arm 25c eventually exceeds the intertooth pitch of the adjustment wheel 13a. The bolt 13 then rotates to be screwed out of the tubular segment 14, thus automatically adjusting the clearance between the brake drum and the linings 6 to a substantially constant value. Thus a substantially constant stroke length is maintained for application of the service brake, thereby providing better brake response.

When the parking brake is applied, the shoe clearance automatic adjustment device 12, the idler link 11 and the adjustment lever 25 trail in unison with the second brake shoe 3 by the amount which it opens. With respect to the first brake shoe 2, the pin 24 moves within the elongated hole 5d and hence imparts no negative effect on the adjustment lever 25. As a result, the automatic adjustment will be no less than the corresponding amount of rotation of the adjustment lever when the service brake is applied.

As will be apparent from the above, the biasing force of the adjustment spring 26 acts on the idler link 11 even when the brakes are released, hence the idler link 11 will be caused not to vibrate when the vehicle is in motion.

## Embodiment 4

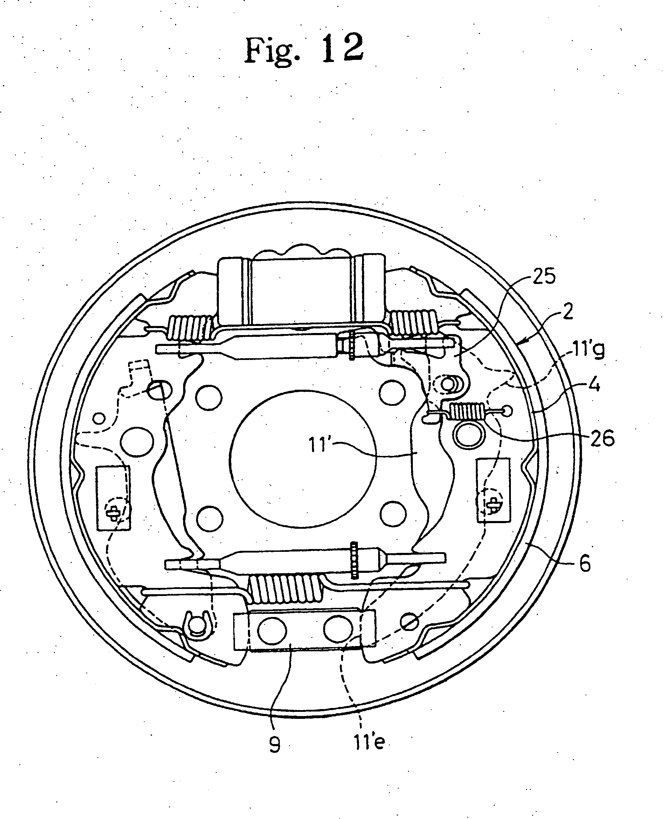

In consideration of the previous embodiment, a required automatic shoe clearance adjustment is made possible until the brake linings 6 are fully worn by allowing the idler link 11 and the adjustment lever 25 to move in unison with the first brake shoe 2. In the present embodiment, illustrated in Fig. 12, a modified configuration provides for movement of the idler link 11 and the first brake shoe 2 in unison. The components shown in Fig. 12 which differ from those of previous embodiments are marked with an apostrophe. In this embodiment, the second end 11'e of the idler link 11' abuts against the anchor block 9. The braking operation and automatic adjustment action of this embodiment is the same as Embodiment 3 and an explanation will be omitted.

As also shown in Fig. 12, the idler link 11' comprises a projection 11'g disposed to engage with the inner face of the shoe rim 4. The same function can be achieved as above. Essential is that when the service brake is applied, the link 11' opens in unison with the first brake shoe 2 and that when the parking brake is applied, the two components rotate relative to one another.

With this embodiment, even as the linings continue to wear, the link 11', adjustment lever 25 and adjustment spring 26 virtually move in unison with the first brake shoe 2, thus having no effect on the automatic shoe clearance adjustment action and therefore providing reliable adjustment over a long period of life time.

## Embodiment 5

According to this aspect of the invention, the stroke of the parking brake actuator means 16 is automatically adjusted. Reference is made to Figs. 1, 4 and 13 (a partially enlarged section of Fig. 1) in which components having the same function as the above-mentioned shoe clearance adjustment device are marked with an apostrophe.

A pin 27 is fixed to the second end of the shoe web 5 of the first brake shoe 2 and a hole 25'a is formed in the base portion of the adjustment lever 25' for receiving the pin 27. A first arm 25'b abuts against the stepped face 15'b of the notched groove 15'a of the sleeve 15', while the second arm 25'c engages with the adjustment wheel 13'a.

Alternatively, the pin 27 can be affixed to the link 11 and the adjustment lever 25' can pivot on the stem of the pin 27 which penetrates freely through the shoe web 5.

An adjustment spring 26' is mounted between a bracket 25'd disposed perpendicular on the adjustment lever 25' and a hollow portion of the protuberance 11a of the link 11 as best shown in Fig. 1. The biasing force of the spring acts on the adjustment lever 25' to urge clockwise rotation about the pin 27 as shown in Fig. 1.

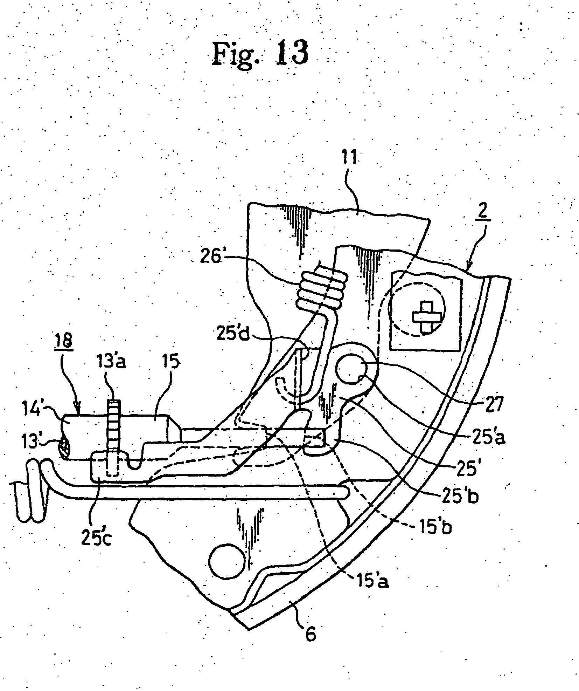

The automatic mechanism for stroke adjustment will now be discussed. When the service brake is applied and both brake shoes 2, 3 spread open to the outside, the strut 18 remains in contact with the brake lever 17, while the idler link 11 moves in unison with the first brake shoe 2. As shown in Figs. 1 and 13, the hole 25'a engaging with the pin 27 moves the adjustment lever 25' with the first brake shoe 2. The spring 26' then produces clockwise movement of the adjustment lever 25' about the pin 27 by an amount equal to the outward movement of the first brake shoe 2.

As the linings 6 continue to wear, the amount of rotation of the third arm 25'c of the adjustment lever 25' eventually exceeds the intertooth pitch of the adjustment wheel 13'a. The adjustment bolt 13' is then rotated so as to screw out of the tubular segment 14' thereby maintaining the gap with respect to the link 11 at a constant value. As a result, the stroke of the brake lever 17 when actuated is maintained at a constant value, thus providing better brake response.

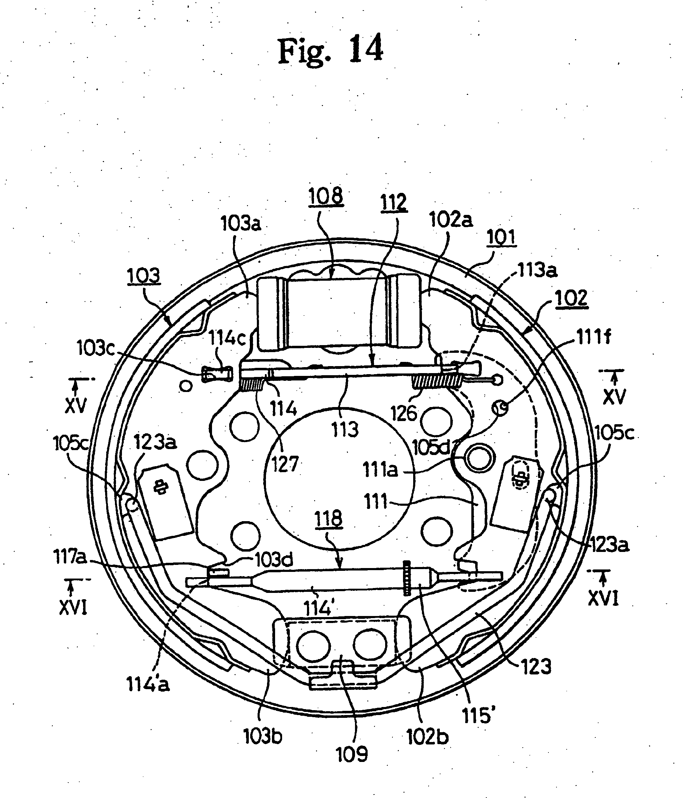

An embodiment with a one-shot type automatic adjustment device will now be explained in conjunction with Figs. 14 to 16. The automatic adjustment mechanism is activated when the service brake is applied, and this embodiment with a cross-pull type parking brake. The same components of the previous embodiments are identified with reference numerals in the 100 series for which the detailed explanation is omitted here.

As shown in Fig. 14, the components include a back plate 101, two brake shoes 102, 103 having first adjacent ends 102a, 103a and second adjacent ends 102b, 103b. The actuator 108 is activated by the service brake. Also provided are an anchor block 109, the idler link 111 with a protuberance 111a, another protuberance 111f, a notched groove 111c on a first end of the link 111 and a notched groove 111d on the second end thereof. The protuberance 111f is disposed to abut against the radially outward perimeter of a large diameter hole 105d formed in the shoe web of the first brake shoe 102 on the outer side of the brake.

The two shoe return springs 21 and 22 shown in Fig. 1 are replaced in this embodiment with a slightly obtuse U-shaped return spring 123 shown in Fig. 14. The central segment of the U-spring is mounted to the anchor block 109 and the two free ends 123a of the bent legs are fixed in holes 105c formed in each of the first and second brake shoe 102, 103. The spring 123 is displaced to provide a return force on the brake shoes below the level of the pivot point (protuberance 111a). The point of application of the return force at the holes 105c is between the anchor block 109 and the pivot point (protuberance 111a). In this manner, the first ends 102a, 103a of the brake shoes 102, 103 will spread open at first when the service brake is applied. The return spring means is not limited to the construction shown here. A variety of shapes and configurations can be used, such as splitting the lower return spring into two segments as is provided in the

prior art.

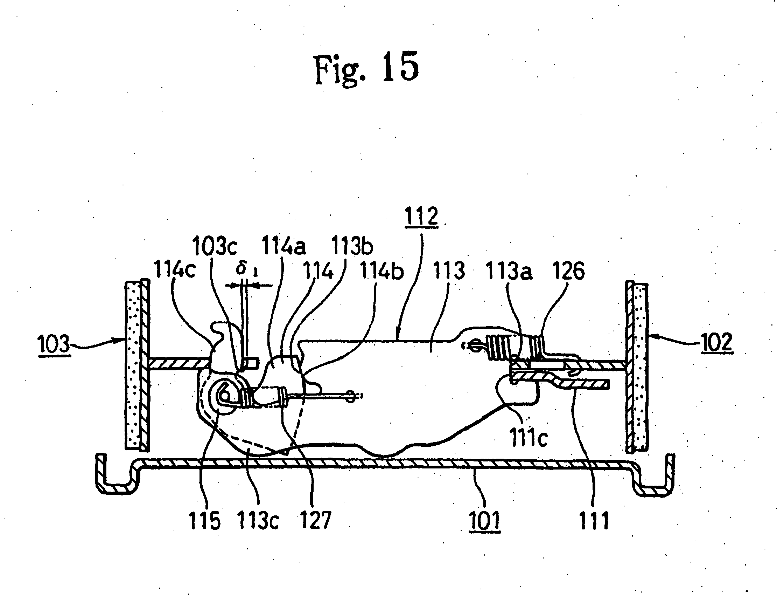

The automatic shoe clearance adjustment device 112 as shown in Figs. 14 and 15 comprises a strut plate 113, a bell crank lever 114 and two adjustment springs 126, 127 and the other component. The bottom of a notched groove 113a formed at first end of the strut plate 113 abuts against the bottom of the notched groove 111c at the first end of the link 111. Small teeth 113b are formed on a surface at an intermediate portion of the strut plate 113.

The base of the bell crank lever 114 is pivotally mounted by a pin 115 at the second end 113c of the strut plate 113. A fan-shaped arm 114a extends from the bell crank base and has teeth 114b formed at its outer perimeter, which are arranged to mesh with the short teeth 113b of the strut plate 113. A second arm 114c of the bell crank lever 114 is formed with a cam face and is passed into a rectangular hole 103c formed in the second brake shoe 103 with a clearance of $\delta_1$.

The first adjustment spring 126 is mounted between the first brake shoe 102 and the adjustment plate 113, while the second adjustment spring 127 is mounted between the plate 113 and the pin 115. The return force of the first adjustment spring 126 in the mounted condition is said to be greater than that of the second adjustment spring 127.

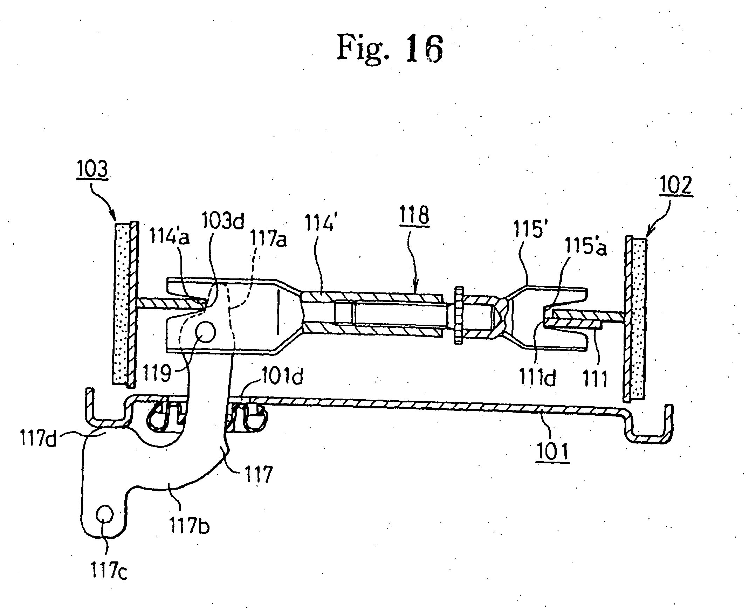

As shown in Figs. 14 and 16, the parking brake actuator means is the cross pull type and includes the brake lever 117 and the strut 118. The finger shaped segment 117a at first end of the brake lever 117 abuts against the bottom of the notched groove 103d formed at the second end 103b of the second brake shoe 103. A second arm 117b of the brake lever 117 penetrates freely through a hole 101d in the back plate 101. A mounting hole 117c is formed on the L-shaped end of the second arm 117b for connecting the parking brake cable. A projection 117d is also formed on the brake lever 117, which abuts against the outer surface of the back plate 101 to regulate the return position of the lever 117. The return stop means are not restricted to this configuration.

The components of the strut 118 which are the same as the previous embodiments are indicated with an apostrophe. The notched groove 114'a formed at one end of the tubular segment 114' engages with the second end of the second brake shoe 103. The brake lever 117 is pivotally mounted about a pin 119 to the end of the segment 114'. A notched groove 115'a on the sleeve 115' engages with the second notched groove 111d on the link 111 and also the shoe web of the first brake shoe 102.

The operation of this embodiment when the service brake is applied is the same as Embodiment 1. When the parking brake is applied, the only difference is that the brake lever 117 is now configured as a cross-pull lever. Thus, when the parking brake cable is pulled at the mounting hole 117c, the brake lever 117 rotates counter-clockwise thereby urging the strut 118 to the right in Fig. 16 by means of the pin 119. The point of abutment of the lever 117 is at the notched groove 103d of the second brake shoe 103. The applied force is transferred in sequence from the strut 118 to the idler link 111, the automatic shoe clearance adjustment device 112 and finally to the rectangular hole 103c of the second brake shoe 103 as shown in Fig. 14. As a result, the first end 103a of the second brake shoe 103 opens and the second end 103b abuts against the anchor block 109 as the fulcrum.

At the same time, the bottom of the notched groove 111c of the idler link 111 abuts against the strut plate 113 producing a reactive outward force at the pivot point or protuberance 111a of the link 111. In this manner, the first end 102a of the first brake shoe 102 is urged outwardly, the second end 102b of the brake shoe 102 acting as the fulcrum. The first brake shoe 102 is thereby opened and engages with the brake drum.

As will be apparent, the movements of both of the brake shoes 102 and 103 when the service brake and parking brake are applied are the same as for the previous embodiments. The same effectiveness and advantages in operation can be obtained.

The present embodiment can also be adapted to include an automatic adjustment mechanism as will be discussed in conjunction with Fig. 15. When the service brake is applied, the two brake shoes 102, 103 spread open, whereby the strut plate 113 trails the first brake shoe 102 by means of the force of the first adjustment spring 126. When the linings 6 are worn, the amount by which the shoes open eventually exceeds the clearance value $\delta_1$ of the bell crank lever 114 plus the height of the short teeth 114b. The bell crank lever 114 is then forced to turn about the pin 115, such that the teeth 113b, 114b shift in their point of engagement. The shifted point provides an extension in the overall length of the adjustment device 112 between the two brake shoes 102, 103.

When the parking brake is applied, the only effect is that the strut plate 113 and the bell crank lever 114 move in unison with the second brake shoe 103 to the left. The first adjustment spring 126 is axially extended when the first brake shoe 102 moves to the right in Fig. 14. In any case, there is no effect on the automatic shoe clearance adjustment action of the adjustment device 112.

The present invention is not limited to the above embodiments, while various modifications can be made. For example, the incremental type of automatic shoe clearance adjustment device discussed in conjunction with Figs. 10 or 13 can be combined with the cross-pull type of parking brake. Conversely, the one-shot type of automatic shoe clearance adjustment device can be combined with the forward pull type of parking brake. Other modifications include superimposing the idler link 11, 111 on the side face of the shoe web 5 which opposes the brake drum when mounted. A stroke adjustment device can also be fitted to the drum brake device with the automatic shoe clearance adjustment device disclosed in US-A-5,275,260 to provide a more reliable adjustment action over a prolonged period of time. Other variations and modifications will be apparent to those skilled in the present art.

**Claims**

1. A drum brake device, comprising:

   - first and second brake shoes (2, 3) disposed opposite one another on a back plate (1),
   - an actuator cylinder (8) activatable by a service brake disposed between first adjacent ends (2a, 3a) of the brake shoes (2, 3),
   - an anchor block (9) disposed between second adjacent ends (2b, 3b) of the brake shoes (2, 3),
   - a shoe clearance adjustment device (12) disposed adjacent the actuator cylinder (8) and mounted between the brake shoes (2, 3),
   - parking brake actuator means (16) which is activatable by a parking brake, the parking brake actuator means (16) has a brake lever (17) pivotally mounted on the second brake shoe (3) at the second adjacent end (3b) of the second brake shoe (3) and a strut (18) disposed adjacent the anchor block (9), and
   - an idler link (11) having a pivot point (11 a) which is always pivotally mounted on the first brake shoe (2) at the mid section of the first brake shoe (2), and wherein :
   - a first end (11c) and a second end (11d) of the idler link (11) are functionally engaging with the shoe clearance adjustment device (12) and the strut (18), respectively, **characterised in that**
   - the distance (h3) from the pivot point (11a) of the idler link (11) with the first brake shoe (2) to the strut (18) in the direction that is perpendicular to the strut (18) is greater than the distance (h2) from the pivot point (11a) of the idler link (11) with the first brake shoe (2) to the shoe clearance adjustment device (12) in the direction that is perpendicular to the shoe clearance adjustment device (12).

2. The drum brake device according to claim 1,
   **characterized in that**, when the service brake is applied to urge the first and second brake shoes (2, 3) outwardly, the idler link (11) moves together with the first brake shoe (2).

3. The drum brake device according to claims 1 or 2,
   **characterized in that** the shoe clearance adjustment device (12) is fitted with an automatic adjustment mechanism (25) adapted to sense the amount by which the brake shoes (2, 3) open and automatically adjusts the clearance between the brake shoes (2, 3) and the brake drum.

4. The drum brake device according to any of claims 1 to 3,
   **characterized in that** first and second spring means (21, 22) are provided such that the resistance to spread open the brake shoes (2, 3) at their second ends (2b, 3b) is greater than the resistance to spread open the brake shoes (2, 3) at their first ends (2a, 3a).

5. The drum brake device according to claim 4,
   **characterized in that**, when taking the pivot point (11 a) of the idler link (11) as the fulcrum, the torque applied to the brake shoes (2, 3) by the first shoe return spring (21) mounted between the first ends (2a, 3a) of the brake shoes (2, 3) is less than the torque applied by the second shoe return spring (22) mounted between the second ends (2b, 3b) of the brake shoes (2, 3).

6. The drum brake device according to any of claims 1 to 5,
   **characterized in that** a protuberance (11a) as the pivot point is integrally formed at the mid section of the idler link (11) or at the mid section of the first brake shoe (2), the protuberance (11a) being pivotal in a hole (5a) formed in a web (5) of the first brake shoe (2) or in the idler link (11).

**Patentansprüche**

1. Trommelbremsvorrichtung, umfassend:

   - erste und zweite Bremsbacken (2, 3), die sich gegenüber liegend auf einer Rückenplatte (1) angeordnet sind,
   - einen Betätigungszylinder (8), der durch eine Betriebsbremse aktivierbar ist, die zwischen ersten angrenzenden Enden (2a, 3a) der Bremsbacken (2, 3) angeordnet ist,
   - einen Ankerblock (9), der zwischen zweiten angrenzenden Enden (2b, 3b) der Bremsbacken (2, 3) angeordnet ist,
   - eine Vorrichtung (12) zur Bremsbackenspielnachstellung, die angrenzend am Betätigungszylinder (8) angeordnet und zwischen den Bremsbacken (2, 3) befestigt ist,
   - eine Feststellbremse-Betätigungsmittel (16), das durch eine Parkbremse aktivierbar ist, wobei das Feststellbremse-Betätigungsmittel (16) einen Bremshebel (17) aufweist, der drehbar an der zweiten Bremsbacke (3) an dem zweiten angrenzenden Ende (3b) der Bremsbacke (3) befestigt ist und eine Strebe (18), die angrenzend am Ankerblock (9) angeordnet ist und
   - eine Gelenkhabel (11) mit einem Drehbewegungspunkt (11a), der stets drehbar an der ersten Bremsbacke (2) am mittleren Abschnitt der ersten Bremsbacke (2) befestigt ist und wobei:
   - ein erstes Ende (11c) und ein zweites Ende (11d) der Gelenkhabel (11) funktionsmäßig jeweils in die Vorrichtung zur Bremsbackenspielnachstellung (12) oder die Strebe (18) eingreift, **dadurch gekennzeichnet, dass**
   - der Abstand (h3) vom Drehbewegungspunkt (11a) der Gelenkhabel (11) mit der ersten Bremsbacke (2) zur Strebe (18) in der Richtung, die senkrecht zur Strebe (18) liegt, größer ist, als der Abstand (h2) vom Drehbewegungspunkt (11a) der Gelenkhabel (11) mit der ersten Bremsbacke (2) zur Vorrichtung der Bremsbackenspielnachstellung (12) in der Richtung, die senkrecht zur Vorrichtung zur Bremsbackenspielnachstellung (12) liegt.

2. Trommelbremsvorrichtung nach Anspruch 1,
   **dadurch gekennzeichnet, dass** die Betriebsbremse betätigt wird, um die ersten und zweiten Bremsbacken (2, 3) nach außen zu zwingen, wobei sich die Gelenkhabel (11) zusammen mit der ersten Bremsbacke (2) bewegt.

3. Trommelbremsvorrichtung nach Anspruch 1 oder 2,
   **dadurch gekennzeichnet, dass** die Vorrichtung zur Bremsbackenspielnachstellung (12) mit einem automatischen Nachstellmechanismus (25) ausgerüstet ist, der derart angepasst ist, um den Betrag abzutasten, um welchen sich die Bremsbacken (2, 3) öffnen und sich automatisch dem Spiel zwischen den Bremsbacken (2, 3) und der Bremstrommel anpasst.

4. Trommelbremsvorrichtung nach einem der Ansprüche 1 bis 3,
   **dadurch gekennzeichnet, dass** erste und zweite Federmittel (21, 22) derart bereitgestellt sind, sodass der Widerstand zum Öffnen der Bremsbacken (2, 3) an deren zweiten Enden (2b, 3b) größer ist, als der Widerstand zum Öffnen der Bremsbacken (2, 3) an deren ersten Enden (2a, 3a).

5. Trommelbremsvorrichtung nach Anspruch 4,
   **dadurch gekennzeichnet, dass** beim Heranziehen des Drehbewegungspunktes (11a) der Gelenkhabel (11) als Drehachse der auf die Bremsbacken (2, 3) beanspruchte Drehmoment durch die erste Bremsbacken-Rückkehrfeder (21), die zwischen den ersten Enden (2a, 3a) und den Bremsbacken (2, 3) befestigt ist, geringer ist, als der durch die zweite Bremsbacken-Rückkehrfeder (22), die zwischen den zweiten Enden (2b, 3b) der Bremsbacken (2, 3) befestigt ist, beanspruchte Drehmoment.

6. Trommelbremsvorrichtung nach einem der Ansprüche 1 bis 5,
   **dadurch gekennzeichnet, dass** ein Überhang (11a) als der Drehbewegungspunkt integral am mittleren Abschnitt der Gelenkhabel (11) oder am mittleren Abschnitt der ersten Bremsbacke (2) ausgebildet ist, wobei der Überhang (11a) in einem Loch (5a), das in einem Steg (5) der ersten Bremsbacke (2) oder in der Gelenkhabel (11) gebildet ist, drehbar angeordnet ist.

**Revendications**

1. Dispositif de frein à tambour, comprenant:

- des premier et second patins de frein (2, 3) disposés à l'opposé l'un de l'autre sur une plaque arrière (1),
- un cylindre d'actionneur (8) pouvant être actionné par un frein de service disposé entre les premières extrémités adjacentes (2a, 3a) des patins de frein (2, 3),
- un bloc d'ancrage (9) disposé entre les secondes extrémités adjacentes (2b, 3b) des patins de frein (2, 3),
- un dispositif d'ajustement de jeu de patin (12) disposé de façon adjacente au cylindre d'actionneur (8) et monté entre les patins de frein (2, 3),
- des moyens d'actionnement à frein de parcage (16) qui sont actionnables au moyen d'un frein de parcage, les moyens d'actionnement à frein de parcage (16) possèdent un levier de frein (17) monté de façon pivotante sur le second patin de frein (3) au niveau de la seconde extrémité adjacente (3b) du second patin de frein (3) et une entretoise (18) disposée de façon adjacente au bloc d'ancrage (9), et
- une tige de renvoi (11) ayant un point d'articulation (11a) qui est toujours monté de façon pivotante sur le premier patin de frein (2) au niveau de la section intermédiaire du premier patin de frein (2), et dans laquelle:
- une première extrémité (11c) et une seconde extrémité (11d) de la tige de renvoi (11) sont en prise de façon fonctionnelle avec le dispositif d'ajustement de jeu de patin (12) et l'entretoise (18), respectivement,

**caractérisé en ce que**

- la distance (h3) du point d'articulation (11a) de la tige de renvoi (11) avec le premier patin de frein (2) à l'entretoise (18) dans la direction qui est perpendiculaire à l'entretoise (18) est supérieure à la distance (h2) du point d'articulation (11a) de la tige de renvoi (11) avec le premier patin de frein (2) au dispositif d'ajustement de jeu de patin (12) dans la direction qui est perpendiculaire au dispositif d'ajustement de jeu de patin (12).

2. Dispositif de frein à tambour selon la revendication 1,
   **caractérisé en ce que**, lorsque le frein de service est appliqué pour amener les premier et second patins de frein (2, 3) vers l'extérieur, la tige de renvoi (11) se déplace conjointement avec le premier patin de frein (2).

3. Dispositif de frein à tambour selon la revendication 1 ou 2, **caractérisé en ce que** le dispositif d'ajustement de jeu de patin (12) est doté d'un mécanisme d'ajustement automatique (25) adapté pour détecter la quantité de laquelle s'ouvrent les patins de frein (2, 3) et ajuste automatiquement le jeu entre les patins de frein (2, 3) et le tambour de frein.

4. Dispositif de frein à tambour selon l'une quelconque des revendications 1 à 3,
   **caractérisé en ce que** lesdits premier et second moyens de ressort (21, 22) sont prévus de telle sorte que la résistance à l'extension en position ouverte des patins de frein (2, 3) à leurs secondes extrémités (2b, 3b) est supérieure à la résistance à l'extension en position ouverte des patins de frein (2, 3) à leurs premières extrémités (2a, 3a).

5. Dispositif de frein à tambour selon la revendication 4,
   **caractérisé en ce que**, lorsque l'on considère le point d'articulation (11a) de la tige de renvoi (11) comme le point d'appui, le couple appliqué sur les patins de frein (2, 3) par le premier ressort de rappel de frein (21) monté entre les premières extrémités (2a, 3a) des patins de frein (2, 3) est inférieur au couple appliqué par le second ressort de rappel de patin (22) monté entre les secondes extrémités (2b, 3b) des patins de frein (2, 3).

6. Dispositif de frein à tambour selon l'une quelconque des revendications 1 à 5,
   **caractérisé en ce qu'**une protubérance (11a) en tant que point d'articulation est formée d'un seul tenant au niveau de la section intermédiaire de la tige de renvoi (11) ou au niveau de la section intermédiaire du premier patin de frein (2), la protubérance (11a) étant pivotante dans un trou (5a) formé dans une âme (5) du premier patin de frein (2) ou dans la tige de renvoi (11).

# Fig. 1

EP 1 473 480 B1

# Fig. 2

# Fig. 3

EP 1 473 480 B1

# Fig. 4

EP 1 473 480 B1

## Fig. 5

## Fig. 6

# Fig. 7

EP 1 473 480 B1

# Fig. 8

# Fig. 9

# Fig. 10

# Fig. 11

# Fig. 12

Fig. 13

# Fig. 14

EP 1 473 480 B1

# Fig. 15

# Fig. 16

EP 1 473 480 B1

# Fig. 17

EP 1 473 480 B1

# Fig. 18

# Fig. 19